# EUROPÄISCHE PATENTSCHRIFT

(11) **EP 4 338 998 B1**
(45) Veröffentlichungstag und Bekanntmachung des Hinweises auf die Patenterteilung: **24.12.2025**
(21) Anmeldenummer: 23181501.0
(22) Anmeldetag: 26.06.2023
(51) Int. Cl.: B60K 31/12, B60T 8/17, B60T 8/32, B60K 31/00, B60T 7/22, B60W 30/09, B60W 30/18, B60W 40/072, B60W 30/16

(54) **VERFAHREN UND FAHRERASSISTENZSYSTEM ZUM BETREIBEN EINES ZWEIRADS**
METHOD AND DRIVER ASSISTANCE SYSTEM FOR OPERATING A TWO-WHEELED VEHICLE
PROCÉDÉ ET SYSTÈME D'ASSISTANCE AU CONDUCTEUR POUR LE CONTRÔLE D`UN DEUX-ROUES

(30) Priorität: 15.09.2022 DE 102022209678
(43) Veröffentlichungstag der Anmeldung: 20.03.2024
(73) Patentinhaber: Robert Bosch GmbH, 70442 Stuttgart (DE)
(72) Erfinder: Schoenherr, Michael, 71272 Renningen-Malmsheim (DE)

(56) Entgegenhaltungen:
- EP-A1- 3 335 953
- WO-A1-2021/090233
- DE-U1- 202015 002 817
- US-A1- 2015 081 189

## Beschreibung

### Gebiet der Erfindung

Die Erfindung betrifft ein Verfahren zum Betreiben eines Zweirads mit einem Fahrerassistenzsystem, ein entsprechendes Fahrerassistenzsystem sowie ein entsprechendes Computerprogrammprodukt.

### Stand der Technik

Ein dynamisches Fahrerassistenzsystem eines Fahrzeugs kann zu einem vorausfahrenden Fahrzeug über Systemeingriffe in ein Antriebssystem des Fahrzeugs und/oder ein Bremssystem des Fahrzeugs einen geschwindigkeitsabhängigen Sicherheitsabstand einhalten. Dazu kann ein Antriebsmoment verringert und/oder ein Bremsmoment erhöht werden, wenn sich ein Abstand zwischen den Fahrzeugen an den Sicherheitsabstand annähert. Wenn der Abstand groß genug ist, kann das Fahrerassistenzsystem den Abstand überwachen, ohne einzugreifen. Dadurch kann das Fahrzeug über Fahrpedal und Bremspedal konventionell bedient werden, so lange der Abstand größer als der Sicherheitsabstand ist. Wenn sich das Fahrzeug aber so an das vorausfahrende Fahrzeug annähert, dass der Sicherheitsabstand für die gefahrene Geschwindigkeit unterschritten würde, greift das Fahrerassistenzsystem mit den Systemeingriffen ein und verzögert das Fahrzeug so, dass der Sicherheitsabstand eingehalten wird. Das Dokument EP3335953A1 offenbart ein Neigefahrzeug, das mit einer aktiven Fahrassistenzvorrichtung ausgestattet ist. Diese Vorrichtung unterstützt den Fahrer durch die Steuerung der Beschleunigung basierend auf dem Neigungszustand des Fahrzeugs, um sanftere und sicherere Kurvenfahrten zu gewährleisten.

### Offenbarung der Erfindung

Vor diesem Hintergrund werden mit dem hier vorgestellten Ansatz ein Verfahren zum Betreiben eines Zweirads mit einem Fahrerassistenzsystem, ein entsprechendes Fahrerassistenzsystem, sowie ein entsprechendes Computerprogrammprodukt gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

Soweit in der vorliegenden Anmeldung von einem "Fahrzeug" die Rede ist, das mit dem erfindungsgemäßen Steuersystem bzw. Verfahren versehen ist oder dieses umfasst, ist darunter ein Zweirad im Sinne der Ansprüche zu verstehen.

### Vorteile der Erfindung

Ein dynamisches Fahrerassistenzsystem eines Zweirads überwacht einen Abstand des Zweirads zu einem vorausfahrenden Fahrzeug kontinuierlich. So kann das Fahrerassistenzsystem das Zweirad bei einer unzulässigen Annäherung an ein anderes Fahrzeug zumindest einen niederschwelligen Systemeingriff an Bremse und/oder Antrieb auslösen, wenn eine Aufmerksamkeit eines Fahrers des Zweirads kurzfristig abgelenkt sein sollte oder der Fahrer den Abstand falsch einschätzt. Der niederschwellige Systemeingriff resultiert in einem für den Fahrer spürbaren Ruck. So wird die die Aufmerksamkeit des Fahrers wieder voll auf ein Verkehrsgeschehen um das Zweirad gelenkt. Aufgrund einer kleinen Masse des Zweirads kann der Ruck deutlich gefühlt werden.

Falls daraufhin kein Eingriff des Fahrers zum Erhöhen des Abstands beziehungsweise zum Verringern einer Annäherung an das vorausfahrende Fahrzeug erfolgt, kann das Fahrerassistenzsystem das Zweirads über stärkere Systemeingriffe abbremsen, sodass der Sicherheitsabstand gewahrt bleibt.

Bei einem Zweirad kann die Aufmerksamkeit des Fahrers vorwiegend während einer Geradeausfahrt nachlassen. Dann kann das Fahrerassistenzsystem seine Vorteile voll entfalten und den Fahrer vor einer unzulässigen Annäherung warnen. Während einer Kurvenfahrt ist der Fahrer aber so konzentriert, dass er selbst jederzeit die Kontrolle über den Abstand zum vorausfahrenden Fahrzeug hat. Während der Kurvenfahrt kann auch der eigentlich für die gefahrene Geschwindigkeit erforderliche Sicherheitsabstand deutlich unterschritten werden, ohne dass eine erhöhte Kollisionsgefahr besteht. Insbesondere bei sehr engen Kurven kann es zu einer sehr nahen Annäherung zum vorausfahrenden Fahrzeug kommen, da das vorausfahrende Fahrzeug ab einem Anbremspunkt der Kurve stark verzögert und näherungsweise an einem Scheitelpunkt der Kurve wieder entsprechend stark beschleunigt. Dieses vorhandene Vorwissen kann der Fahrer ausnutzen und kurz vor dem Scheitelpunkt sehr nahe auf das vorausfahrende Fahrzeug auffahren.

Bei dem hier vorgestellten Ansatz wird eine Abstandsfunktion des dynamischen Fahrerassistenzsystems während einer Kurvenfahrt des Zweirads zumindest abgeschwächt. Dadurch ergeben sich spätere und/oder schwächere Systemeingriffe während der Kurvenfahrt. Zusätzlich kann eine Irritation des Fahrers während der Kurvenfahrt durch die Systemeingriffe vermieden werden.

Es wird ein Verfahren zum Betreiben eines Zweirads mit einem Fahrerassistenzsystem vorgeschlagen, wobei eine Abstandsfunktion des Fahrerassistenzsystems einen Abstand zu einem vorausfahrenden Zielobjekt unter Verwendung von Systemeingriffen in ein Bremssystem und/oder ein Antriebssystem des Zweirads auf einen geschwindigkeitsabhängigen Sicherheitsabstand regelt, wobei die Abstandsfunktion während einer Kurvenfahrt des Zweirads degradiert wird.

Ideen zu Ausführungsformen der vorliegenden Erfindung können unter anderem als auf den nachfolgend beschriebenen Gedanken und Erkenntnissen beruhend angesehen werden.

Ein Fahrerassistenzsystem kann in ein Steuergerät eines Fahrzeugs integriert sein. Das Fahrerassistenzsystem kann Sensorinformationen verarbeiten und Steuersignale erzeugen. Insbesondere kann das Fahrerassistenzsystem Sensorsignale von zumindest einem Entfernungssensor des Zweirads verarbeiten und Steuersignale für ein Antriebssystem des Zweirads und alternativ oder ergänzend für ein Bremssystem des Fahrzeugs bereitstellen. Die Steuersignale steuern einen Systemeingriff in das Fahrzeug an. Der Systemeingriff kann insbesondere in einer Verzögerung des Fahrzeugs resultieren.

Die Steuersignale können beispielsweise ein verringertes Antriebsmoment und/oder ein erhöhtes Bremsmoment zum Verzögern des Zweirads anfordern.

Dabei kann das Zweirad sowohl durch eine Verringerung des Antriebsmoments als auch eine Erhöhung des Bremsmoments oder eine Kombination daraus verzögert werden.

Der Entfernungssensor kann einen Erfassungsbereich vor dem Fahrzeug erfassen und einen Abstand zu Objekten in dem Erfassungsbereich in Abstandsinformationen abbilden. Der Entfernungssensor kann beispielsweise ein Radarsensor, ein Lidarsensor oder eine Kamera sein. Der Abstand kann als Zeitlücke abgebildet werden. Die Zeitlücke entspricht einer Zeitdauer zwischen einem Zeitpunkt, an dem ein vorausfahrendes Objekt einen definierten Punkt überfährt und dem Zeitpunkt, an dem das Fahrzeug denselben Punkt überfährt. Über eine Geschwindigkeit des Fahrzeugs ergibt sich somit der Abstand zu dem vorausfahrenden Objekt.

Der Entfernungssensor kann bei einer Kurvenfahrt des Fahrzeugs eine verringerte Erfassungsleistung aufweisen. Insbesondere kann durch eine Schräglage eines Zweirads während der Kurvenfahrt eine Bezugsebene des Erfassungsbereichs schräg zu einer Aufstandsfläche des Zweirads ausgerichtet sein. Die Bezugsebene kann bei aufrechtem Zweirad näherungsweise der Aufstandsfläche entsprechen. Dadurch kann der Entfernungssensor insbesondere bei der Kurveneinfahrt auf einer Kurveninnenseite in geringem Abstand zum Zweirad neue Objekte auf der Aufstandsfläche erfassen, die aber tatsächlich keine Bedeutung für das Zweirad aufweisen. Solche Objekte können in ungünstigen Situationen als bewegte Objekte interpretiert werden und zu unbegründeten Systemeingriffen führen. Durch die Schrägstellung der Bezugsebene zur Aufstandsfläche können ferner tatsächlich vorhandene Objekte auf einer Kurvenaußenseite aus dem Erfassungsbereich verschwinden und nicht mehr erfasst werden. Insbesondere bei der Kurvenausfahrt können diese Objekte dann plötzlich wieder erfasst werden und irritierende Systemeingriffe auslösen.

Ein geschwindigkeitsabhängiger Sicherheitsabstand wird mit steigender Geschwindigkeit größer. Der Sicherheitsabstand kann besonders einfach durch eine konstante Sicherheitszeitlücke abgebildet werden. Die Sicherheitszeitlücke kann unabhängig von der aktuellen Geschwindigkeit des Fahrzeugs sein. Bei kleiner Geschwindigkeit resultiert aus der Sicherheitszeitlücke ein kleiner Sicherheitsabstand. Bei großer Geschwindigkeit resultiert aus der Sicherheitszeitlücke ein großer Sicherheitsabstand.

Der Sicherheitsabstand beziehungsweise die Sicherheitszeitlücke kann durch einen Fahrer des Fahrzeugs beeinflusst werden. Dabei kann der Fahrer beispielsweise über eine Bedienerschnittstelle auswählen, ob eine größere Sicherheitszeitlücke beziehungsweise ein größerer Sicherheitsabstand oder eine kleinere Sicherheitszeitlücke beziehungsweise ein kleinerer Sicherheitsabstand verwendet wird. Der Sicherheitsabstand beziehungsweise die Sicherheitszeitlücke kann dabei nicht kleiner als ein minimal notwendiger Wert gewählt werden. Der Sicherheitsabstand beziehungsweise die Sicherheitszeitlücke kann auch über ein Fahrpedal beziehungsweise einen Fahrgriff des Zweirads beeinflusst werden.

Eine Abstandsfunktion des Fahrerassistenzsystems kann die gemessenen Zeitlücke zu einem vorausfahrenden Fahrzeug mit der Sicherheitszeitlücke vergleichen beziehungsweise den gemessenen Abstand mit dem geschwindigkeitsabhängigen Sicherheitsabstand vergleichen. Wenn eine Differenz zwischen der Zeitlücke und der Sicherheitszeitlücke kleiner wird, kann das Fahrerassistenzsystem einen Systemeingriff auslösen, um das Fahrzeug zu verzögern. Durch den Systemeingriff wird sich die Differenz zwischen der Zeitlücke und der Sicherheitszeitlücke langsamer ändern. Die Zeitlücke kann sich so langsamer an die Sicherheitszeitlücke annähern. Der Systemeingriff kann wiederholt oder fortgeführt werden, bis die Zeitlücke innerhalb eines Toleranzbereichs um die Sicherheitszeitlücke liegt und das Fahrzeug mit im Wesentlichen der gleichen Geschwindigkeit hinter dem vorausfahrenden Objekt herfährt.

Eine Kurvenfahrt kann unter Verwendung von Sensorsignalen des Fahrzeugs erkannt werden. Die Kurvenfahrt kann unter Verwendung eines Lenkwinkelsignals erkannt werden. Die Kurvenfahrt kann alternativ oder ergänzend unter Verwendung von Inertialsensorsignalen, wie Beschleunigungssignalen und/oder Drehratensignalen erkannt werden. Beschleunigungssignale können beispielsweise eine aus der Kurvenfahrt resultierende Fliehkraft abbilden. Drehratensignale können beispielsweise ein Kippen eines Zweirads in die Kurve hinein abbilden. Während der Kurvenfahrt ist der Fahrer konzentriert und benötigt zumindest weniger Unterstützung, um das Fahrzeug sicher zu bedienen.

Die Abstandsfunktion kann über eine Rampe degradiert werden. So kann eine plötzliche Änderung der Abstandsfunktion beim Erkennen der Kurvenfahrt vermieden werden. Ebenso kann die Abstandsfunktion am Ende der Kurvenfahrt wieder über eine Rampe hochgefahren werden. Mit anderen Worten kann die Abstandsfunktion ausgerampt und eingerampt werden.

Der Sicherheitsabstand kann während der Kurvenfahrt reduziert werden. Wenn eine Kurvenfahrt erkannt wird, kann ein verringerter Sollwert für den Sicherheitsabstand verwendet werden. Durch den reduzierten Sicherheitsabstand kann das Fahrzeug bei der Kurvenfahrt näher an das vorausfahrende Fahrzeug heranfahren, bevor die Systemeingriffe ausgelöst werden.

Alternativ oder ergänzend können die Systemeingriffe während der Kurvenfahrt abgeschwächt werden. Wenn die Kurvenfahrt erkannt wird und dabei der Sicherheitsabstand unterschritten werden wird, kann weniger stark verzögert werden. Durch abgeschwächte Systemeingriffe kann der Abstand kleiner als der Sicherheitsabstand werden.

Eine Aufmerksamkeitsfunktion des Fahrerassistenzsystems kann unter Verwendung von niederschwelligen Systemeingriffen in das Bremssystem und/oder das Antriebssystem eine Aufmerksamkeit eines Fahrers des Fahrzeugs auf ein Verkehrsgeschehen lenken, wenn der Abstand einen geschwindigkeitsabhängigen Aufmerksamkeitsabstand unterschreitet. Die Aufmerksamkeitsfunktion kann während der Kurvenfahrt ebenfalls degradiert werden. Niederschwellige Systemeingriffe können für den Fahrer aufgrund des resultierenden Rucks gut spürbar sein, jedoch keine wesentliche Geschwindigkeitsveränderung des Fahrzeugs bewirken. Bei einer Geradeausfahrt kann der Fahrer die niederschwelligen Systemeingriffe spüren und sein Verhalten so anpassen, dass die Systemeingriffe aufhören. Da der Fahrer in der Kurve auf seine Fahraufgabe konzentriert ist, kann selbst der niederschwellige Systemeingriff die Konzentration stören. Der Fahrer kann durch den Systemeingriff eher abgelenkt werden und letztendlich weniger sicher durch die Kurve fahren. Durch die Abschwächung der Systemeingriffe während der Kurvenfahrt kann der Fahrer sich voll auf die Kurvenfahrt konzentrieren. Ein geschwindigkeitsabhängiger Aufmerksamkeitsabstand kann durch eine geschwindigkeitsunabhängige Aufmerksamkeitszeitlücke abgebildet sein.

Der Aufmerksamkeitsabstand kann während der Kurvenfahrt reduziert werden. Wenn die Kurvenfahrt erkannt wird, kann ein verringerter Sollwert für den Aufmerksamkeitsabstand verwendet werden. Durch den reduzierten Aufmerksamkeitsabstand kann das Fahrzeug bei der Kurvenfahrt näher an das vorausfahrende Fahrzeug heranfahren, bevor die niederschwelligen Systemeingriffe ausgelöst werden.

Erfindungsgemäß degradiert das Fahrerassistenzsystem die Abstandsfunktion in Abhängigkeit von der Schräglage eines Zweirads. In einer bevorzugten Ausführungsform der Erfindung degradiert das System zudem auch die Aufmerksamkeitsfunktion in Abhängigkeit von der Schräglage.

Die Kurvenfahrt kann anhand eines Schräglagenwinkels des Zweirads erkannt werden. Der Schräglagenwinkel kann die Schräglage abbilden. Die Schräglage kann als Abweichung des Zweirads von der Vertikalen verstanden werden. Der Schräglagenwinkel kann durch einen Schräglagenwinkelsensor des Zweirads erfasst werden. Der Schräglagenwinkel kann auch durch ein Zusammenführen mehrerer Sensorinformationen errechnet werden.

Die Abstandsfunktion beziehungsweise die Aufmerksamkeitsfunktion können degradiert werden, wenn die Schräglage größer als ein vorbestimmter Schwellenwert ist. Die Abstandsfunktion kann ab einer vorbestimmten Schräglage des Zweirads degradiert werden. Bei Geradeausfahrt ist die Schräglage des Zweirads sehr klein. Aufgrund einer kontinuierlichen geringfügigen Balancierbewegung des Zweirads kann aber innerhalb eines Toleranzbereichs um die Vertikale von einer Geradeausfahrt des Zweirads ausgegangen werden. Der Schwellenwert für die Kurvenfahrt kann beispielsweise zwischen 10° und 30° Abweichung von der Vertikale liegen. Insbesondere kann der Schwellenwert bei um die 20° Abweichung von der Vertikalen liegen.

Die Abstandsfunktion beziehungsweise die Aufmerksamkeitsfunktion können proportional zur Schräglage degradiert werden. Die Abstandsfunktion beziehungsweise die Aufmerksamkeitsfunktion können umso stärker degradiert werden, je größer die Schräglage beziehungsweise Abweichung von der Vertikalen ist. Die Abstandsfunktion beziehungsweise die Aufmerksamkeitsfunktion können auch in Abhängigkeit von der Schräglage schrittweise mit vordefinierten Abschwächungsfaktoren degradiert werden.

Erfindungsgemäß setzt das Fahrerassistenzsystem die Abstandsfunktion aus, sobald die Schräglage einen vorbestimmten Grenzwert überschreitet. In einer bevorzugten Ausführungsform der Erfindung wird zudem auch die Aufmerksamkeitsfunktion ausgesetzt, wenn die Schräglage den vorbestimmten Grenzwert übersteigt. Ab einer bestimmten Schräglage können die Abstandsfunktion beziehungsweise die Aufmerksamkeitsfunktion abgeschaltet werden. Bei einer Kurvenfahrt durch eine sehr enge Kurve ist der Fahrer mit Sicherheit auf das Fahren des Zweirads konzentriert. Ab einer Schräglage von beispielsweise zwischen 35° und 55° können die Abstandsfunktion beziehungsweise die Aufmerksamkeitsfunktion ausgesetzt werden. Insbesondere können die Abstandsfunktion beziehungsweise die Aufmerksamkeitsfunktion ab einer Schräglage von 45° ausgesetzt werden.

Das Verfahren ist vorzugsweise computerimplementiert und kann beispielsweise in Software oder Hardware oder in einer Mischform aus Software und Hardware beispielsweise in einem Fahrerassistenzsystem implementiert sein.

Der hier vorgestellte Ansatz schafft ferner ein Fahrerassistenzsystem für ein Fahrzeug, wobei das Fahrerassistenzsystem dazu ausgebildet ist, um die Schritte einer Variante des hier vorgestellten Verfahrens in entsprechenden Einrichtungen durchzuführen, anzusteuern bzw. umzusetzen.

Das Fahrerassistenzsystem kann ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder einer Kommunikationsschnittstelle zum Einlesen oder Ausgeben von Daten, die in ein Kommunikationsprotokoll eingebettet sind, sein. Die Recheneinheit kann beispielsweise ein Signalprozessor, ein sogenannter System-ASIC oder ein Mikrocontroller zum Verarbeiten von Sensorsignalen und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale des Steuergeräts und des Verfahrens in geeigneter Weise kombiniert, angepasst oder ausgetauscht werden können, um zu weiteren Ausführungsformen der Erfindung zu gelangen.

### Kurze Beschreibung der Zeichnung

Nachfolgend werden Ausführungsformen der Erfindung unter Bezugnahme auf die beigefügte Zeichnung beschrieben, wobei weder die Zeichnung noch die Beschreibung als die Erfindung einschränkend auszulegen sind.

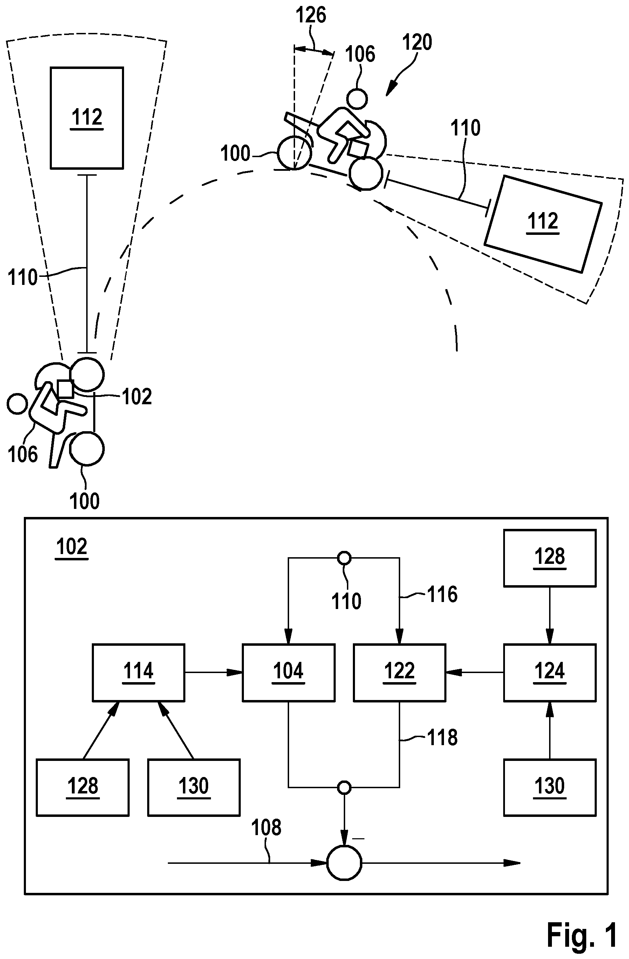

Fig. 1 zeigt eine Darstellung eines Zweirads mit einem Fahrerassistenzsystem gemäß einem Ausführungsbeispiel.
Die Figur ist lediglich schematisch und nicht maßstabsgetreu. Gleiche Bezugszeichen bezeichnen gleiche oder gleichwirkende Merkmale.

### Ausführungsformen der Erfindung

Fig. 1 zeigt eine Darstellung eines Zweirads 100 mit einem Fahrerassistenzsystem 102 gemäß einem Ausführungsbeispiel. Das Fahrerassistenzsystem 102 weist eine Abstandsfunktion 104 auf. Während die Abstandsfunktion 104 aktiviert ist, gibt ein Fahrer 106 des Zweirads 100 eine Geschwindigkeit des Zweirads 100 über einen Fahrerwunsch 108 vor. Der Fahrerwunsch 108 wird über einen Fahrgriff beziehungsweise Gasdrehriff und/oder Bremsbedienelemente des Zweirads 100 eingelesen. Die Abstandsfunktion 104 ist dazu konfiguriert, einen Abstand 110 des Zweirads 100 zu einem vorausfahrenden Zielobjekt 112 mindestens so groß wie einen geschwindigkeitsabhängigen Sicherheitsabstand 114 zu halten. Dazu liest das Fahrerassistenzsystem 102 eine Abstandsinformation 116 von einem Abstandssensor des Zweirads 100 ein. Der Abstandssensor erfasst Objekte in einem Erfassungsbereich vor dem Zweirad 100. Der Abstandssensor erfasst dabei auch das Zielobjekt 112 und bildet den Abstand 110 zwischen dem Zweirad 100 und dem Zielobjekt 112 in der Abstandsinformation 116 ab.

Die Abstandsfunktion 104 vergleicht den Abstand 110 mit dem geschwindigkeitsabhängigen Sicherheitsabstand 114. Wenn sich der Abstand 110 an den Sicherheitsabstand 114 so annähert, dass dieser unterschritten würde, steuert die Abstandsfunktion 104 einen Systemeingriff 118 in ein Bremssystem und/oder ein Antriebssystem des Zweirads 100 an, um das Zweirad 100 zu verzögern.

Der Systemeingriff 118 überlagert dabei den Fahrerwunsch 108 des Fahrers 106. Eine gewünschte Beschleunigung wird dabei durch den Systemeingriff 118 verringert. Eine gewünschte Verzögerung wird durch den Systemeingriff 118 verstärkt.

Bei dem hier vorgestellten Ansatz wird die Abstandsfunktion 104 beim Erkennen einer Kurvenfahrt 120 degradiert. Dabei wird beispielsweise der Sicherheitsabstand 114 während der Kurvenfahrt 120 verringert. Alternativ oder ergänzend können die Systemeingriffe 118 während der Kurvenfahrt 120 abgeschwächt werden. Um abrupte Änderungen der Stärke der Systemeingriffe 118 am Anfang und Ende der Kurvenfahrt 120 zu verhindern, können der Sicherheitsabstand 114 und/oder die Systemeingriffe 118 ausgerampt, also über eine Rampe verringert und eingerampt, also wieder über eine Rampe vergrößert werden.

Das Fahrerassistenzsystem 102 weist ferner eine Aufmerksamkeitsfunktion 122 auf. Die Aufmerksamkeitsfunktion 122 ist dazu konfiguriert, unter Verwendung von schwachen Systemeingriffen 118 eine Aufmerksamkeit des Fahrers 106 auf ein Verkehrsgeschehen um das Zweirad 100 herum zu lenken, wenn der Abstand 110 kleiner als ein Aufmerksamkeitsabstand 124 ist. Der Aufmerksamkeitsabstand 124 ist dabei größer als der Sicherheitsabstand 114. Durch einen schwachen Systemeingriff 118 wird ein Ruck erzeugt, der von dem Fahrer 106 deutlich wahrgenommen wird. Der Ruck ist dabei unabhängig von einer Umgebungslautstärke wahrnehmbar.

In einem Ausführungsbeispiel wird die Aufmerksamkeitsfunktion 122 beim Erkennen der Kurvenfahrt 120 degradiert. Dabei wird beispielsweise der Aufmerksamkeitsabstand 124 während der Kurvenfahrt 120 verringert. Alternativ oder ergänzend können die abgeschwächten Systemeingriffe 118 während der Kurvenfahrt 120 weiter abgeschwächt werden.

In einem Ausführungsbeispiel werden die Abstandsfunktion 104 und/oder die Aufmerksamkeitsfunktion 122 in Abhängigkeit von einer Schräglage 126 des Zweirads 100 degradiert beziehungsweise abgeschwächt. Die Schräglage 126 beziehungsweise ein Schräglagenwinkel des Zweirads 100 sind dabei umso größer, je enger die Kurvenfahrt 120 ist.

Dabei können die Abstandsfunktion 104 und/oder die Aufmerksamkeitsfunktion 122 ab einem vorbestimmten Schwellenwert 128 abgeschwächt werden. Wenn die Schräglage 126 kleiner als der Schwellenwert 128 ist, wird von einer Geradeausfahrt des Zweirads 100 ausgegangen.

Die Abstandsfunktion 104 und/oder die Aufmerksamkeitsfunktion 122 werden in einem Ausführungsbeispiel umso stärker abgeschwächt, je größer die Schräglage 126 ist. Dadurch kann die Abschwächung bei engeren Kurven stärker sein als bei weiten Kurven.

In einem Ausführungsbeispiel werden die Abstandsfunktion 104 und/oder die Aufmerksamkeitsfunktion 122 ab einem vorbestimmten Grenzwert 130 der Schräglage deaktiviert beziehungsweise ausgesetzt.

Nachfolgend werden mögliche Ausgestaltungen der Erfindung nochmals zusammengefasst bzw. mit einer geringfügig anderen Wortwahl dargestellt.

Es wird eine Unterdrückung des Systemeingriffs der Funktion DDA (Dynamic Drive Assist) bei einem Zweirad während einer Kurvenfahrt vorgestellt.

Fahrzeuge können unterschiedliche Fahrerassistenzsysteme aufweisen, die dem Fahrer erhöhten Komfort und mehr Sicherheit bieten (wie z.B. Adaptive Cruise Control (ACC) und Highway Assist (HWA)). Darüber hinaus leisten weitere Assistenzsysteme einen Sicherheitsgewinn durch Abstandswarnungen und Notbremseingriffe. Bei einer als "Dynamic Drive Assist" (DDA) bezeichneten, fahrerorientierten Assistenzfunktion wird dem Fahrer vor allem das Bremsen per Pedal in weiten Teilen abgenommen, während ihm das Gaspedal überlassen bleibt.

Die Funktion DDA kann durch den Fahrer (ähnlich wie ACC) explizit aktiviert werden. In einigen Fällen ist auch eine automatische Aktivierung denkbar. Durch den hier vorgestellten Ansatz kann die Funktion auch für Zweiräder eingesetzt werden. Dabei liegt der Schwerpunkt darauf, den Fahrer auf eine mögliche Kollision (bei Unaufmerksamkeit des Fahrers) mittels einer "sanften" Verzögerung hinzuweisen.

Das Hauptziel bei Zweirädern ist es, einen unaufmerksamen Fahrer mittels einer "sanften" Verzögerung auf ein mögliches Auffahren auf das vorausfahrende Fahrzeug hinzuweisen. Dies ist hauptsächlich notwendig bei einer (mehr oder weniger) Geradeausfahrt. Hier ist eine "sanfte" Verzögerung durch das System unkritisch hinsichtlich der Fahrzeugstabilität. Bei Schräglage ist eine (angepasste) geringe Verzögerung durch das System auch möglich, ohne die Fahrzeugstabilität zu gefährden. Trotzdem fühlt sich ein solcher Eingriff oft nicht sehr komfortabel für den Fahrer an.

Da eine korrekte Objektdetektion und -auswahl mittels einer Umgebungssensorik (beispielsweise durch eine Radar-Sensorik) bei einer Kurvendurchfahrt bei Zweirädern nicht die gleiche Robustheit liefert wie bei einer Geradeausfahrt, kommt es hierbei systembedingt teilweise "spontan" zu einer Fahrzeugverzögerung durch das System. Dies ist für den Fahrer oft unkomfortabel.

Des Weiteren ist ein Zweirad-Fahrer bei der Durchfahrt einer Kurve immer aufmerksam auf den Straßenverlauf und auch den vorausfahrenden Verkehr. Der Abstand zum vorausfahrenden Fahrzeug ist hierbei abhängig von der persönlichen Risikoabschätzung des Fahrers und auch davon, ob das vorausfahrende Fahrzeug eventuell auch ein Freund auch auf einem Zweirad ist, wie beispielsweise bei einer Motorrad Gruppenfahrt.

Bei dem hier vorgestellten Ansatz wird die Fahrzeugverzögerung durch das System beim Zweirad immer dann automatisch deaktiviert, sobald das Fahrzeug sich in einer Kurve befindet. Das kann mittels Schräglagensensoren und Beschleunigungssensoren erkannt werden.

Der Fahrer des Zweirads ist bei Kurvenfahrt aufmerksam. Daher ist eine DDA Systemunterstützung hier nicht notwendig. Beim Transfer von Geradeausfahrt in eine Kurvenfahrt wird daher eine mögliche Verzögerung durch das System aufgelöst. Beim Transfer von der Kurvenfahrt zu einer Geradeausfahrt wird (sofern notwendig) eine Verzögerung durch das System "Ruck frei" aufgebaut.

Unter der Annahme, dass der Fahrer eines Zweirads während einer Kurvenfahrt fokussiert und nicht abgelenkt ist, hinsichtlich der Berücksichtigung des vorausfahrenden Verkehrs, kann ein unnötiger Systemeingriff (Verzögerung) verhindert / verringert werden. Dazu wird die Verzögerung durch das System bei erkannter Kurvendurchfahrt aufgehoben bzw. verhindert.

Eine kurzzeitige Detektion oder ein kurzzeitiger Detektionsverlust eines vorausfahrenden Fahrzeugs während der Kurvenfahrt führt damit nicht zu einem unkomfortablen Systemverhalten.

Der Fahrer des Zweirads kann seinen persönlich gewählten Abstand zum Vordermann ohne eine Beeinflussung durch das System (die DDA-Funktion) manuell einhalten. Bei dem hier vorgestellten Ansatz greift die Funktion (DDA) bei einem Zweirad bei einer Geradeausfahrt mittels einer Fahrzeugverzögerung oder Beschleunigungsreduktion ein, bei einer Kurvendurchfahrt bleibt diese Systemreaktion jedoch aus.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Betreiben eines Zweirads (100) mit einem Fahrerassistenzsystem (102), wobei eine Abstandsfunktion (104) des Fahrerassistenzsystems (102) einen Abstand (110) zu einem vorausfahrenden Zielobjekt (112) unter Verwendung von Systemeingriffen (118) in ein Bremssystem und/oder ein Antriebssystem des Zweirads (100) auf einen geschwindigkeitsabhängigen Sicherheitsabstand (114) regelt, wobei die Abstandsfunktion (104) während einer Kurvenfahrt (120) des Zweirads (100) degradiert wird, wobei die Abstandsfunktion (104) in Abhängigkeit von einer Schräglage (126) des Zweirads (100) degradiert wird, **dadurch gekennzeichnet, dass** die Abstandsfunktion (104) ausgesetzt wird, wenn die Schräglage (126) größer als ein vorbestimmter Grenzwert (130) ist.

2. Verfahren gemäß Anspruch 1, bei dem der Sicherheitsabstand (114) während der Kurvenfahrt (120) reduziert wird.

3. Verfahren gemäß einem der vorhergehenden Ansprüche, bei dem die Systemeingriffe (118) während der Kurvenfahrt (120) abgeschwächt werden.

4. Verfahren gemäß Anspruch einem der vorhergehenden Ansprüche, bei dem die Abstandsfunktion (104) degradiert wird, wenn die Schräglage (126) größer als ein vorbestimmter Schwellenwert (128) ist.

5. Verfahren gemäß einem der vorhergehenden Ansprüche bei dem die Abstandsfunktion (104) proportional zur Schräglage (126) degradiert wird.

6. Verfahren gemäß einem der vorhergehenden Ansprüche, bei dem eine Aufmerksamkeitsfunktion (122) des Fahrerassistenzsystems (102) unter Verwendung von niederschwelligen Systemeingriffen (118) in das Bremssystem und/oder das Antriebssystem eine Aufmerksamkeit eines Fahrers (106) des Zweirads (100) auf ein Verkehrsgeschehen lenkt, wenn der Abstand (110) einen geschwindigkeitsabhängigen Aufmerksamkeitsabstand (124) unterschreitet, wobei die Aufmerksamkeitsfunktion (122) während der Kurvenfahrt (120) degradiert wird.

7. Verfahren gemäß Anspruch 6, bei dem der Aufmerksamkeitsabstand (124) während der Kurvenfahrt (120) reduziert wird.

8. Fahrerassistenzsystem (102) für ein Zweirad (100), wobei das Fahrerassistenzsystem (102) dazu konfiguriert ist, das Verfahren gemäß einem der vorhergehenden Ansprüche in entsprechenden Einrichtungen auszuführen, umzusetzen und/oder anzusteuern.

9. Computerprogrammprodukt, das dazu eingerichtet ist, einen Prozessor bei Ausführung des Computerprogrammprodukts dazu anzuleiten, das Verfahren gemäß einem der Ansprüche 1 bis 8 auszuführen, umzusetzen und/oder anzusteuern.

10. Maschinenlesbares Speichermedium, auf dem das Computerprogrammprodukt gemäß Anspruch 9 gespeichert ist.

## Claims

1. Method for operating a two-wheeled vehicle (100) with a driver assistance system (102), wherein a distance function (104) of the driver assistance system (102) controls a distance (110) from a target object (112) travelling ahead using system interventions (118) in a brake system and/or a drive system of the two-wheeled vehicle (100) to a speed-dependent safety distance (114), wherein the distance function (104) is degraded during cornering (120) of the two-wheeled vehicle (100), wherein the distance function (104) is degraded as a function of an inclination (126) of the two-wheeled vehicle (100), **characterized in that** the distance function (104) is suspended when the inclination (126) is greater than a predetermined limit value (130).

2. Method according to Claim 1, in which the safety distance (114) is reduced during cornering (120).

3. Method according to either of the preceding claims, in which the system interventions (118) are attenuated during cornering (120).

4. Method according to one of the preceding claims, in which the distance function (104) is degraded when the inclination (126) is greater than a predetermined threshold value (128).

5. Method according to one of the preceding claims, in which the distance function (104) is degraded proportionally to the inclination (126).

6. Method according to one of the preceding claims, in which an attention function (122) of the driver assistance system (102) directs the attention of a driver (106) of the two-wheeled vehicle (100) to a traffic situation using low-threshold system interventions (118) in the brake system and/or the drive system when the distance (110) falls below a speed-dependent attention distance (124), wherein the attention function (122) is degraded during cornering (120).

7. Method according to Claim 6, in which the attention distance (124) is reduced during cornering (120).

8. Driver assistance system (102) for a two-wheeled vehicle (100), wherein the driver assistance system (102) is configured to carry out, implement and/or control the method according to one of the preceding claims in corresponding devices.

9. Computer program product which is configured to instruct a processor to carry out, implement and/or control the method according to one of Claims 1 to 8 when executing the computer program product.

10. Machine-readable storage medium on which the computer program product according to Claim 9 is stored.

## Revendications

1. Procédé destiné à faire fonctionner un deux-roues (100) avec un système d'aide à la conduite (102), une fonction de distance (104) du système d'aide à la conduite (102) réglant une distance (110) par rapport à un objet cible (112) se déplaçant devant sur une distance de sécurité (114) dépendant de la vitesse au moyen d'interventions (118) dans un système de freinage et/ou un système d'entraînement du deux-roues (100), la fonction de distance (104) étant dégradée lors de la négociation d'un virage (120) par le deux-roues (100), la fonction de distance (104) étant dégradée en fonction d'une inclinaison (126) du deux-roues (100), **caractérisé en ce que** la fonction de distance (104) est suspendue lorsque l'inclinaison (126) est supérieure à une valeur limite (130) prédéfinie.

2. Procédé selon la revendication 1, dans lequel la distance de sécurité (114) est réduite lors de la négociation du virage (120).

3. Procédé selon l'une des revendications précédentes, dans lequel les interventions (118) dans un système sont réduites lors de la négociation du virage (120).

4. Procédé selon l'une des revendications précédentes, dans lequel la fonction de distance (104) est dégradée lorsque l'inclinaison (126) est supérieure à une valeur de seuil (128) prédéfinie.

5. Procédé selon l'une des revendications précédentes, dans lequel la fonction de distance (104) est dégradée proportionnellement à l'inclinaison (126).

6. Procédé selon l'une des revendications précédentes, dans lequel une fonction d'attention (122) du système d'aide à la conduite (102) dirige l'attention d'un conducteur (106) du deux-roues (100) sur un événement de circulation au moyen d'interventions (118) à seuil bas dans le système de freinage et/ou le système d'entraînement lorsque la distance (110) ne dépasse pas une distance d'attention (124) dépendant de la vitesse, la fonction d'attention (122) étant dégradée lors de la négociation d'un virage (120).

7. Procédé selon la revendication 6, dans lequel la distance d'attention (124) est réduite lors de la négociation du virage (120).

8. Système d'aide à la conduite (102) pour un deux-roues (100), le système d'aide à la conduite (102) étant configuré pour exécuter, mettre en œuvre et/ou piloter le procédé selon l'une des revendications précédentes dans des dispositifs correspondants.

9. Produit de programme d'ordinateur qui est mis au point pour amener un processeur lors de l'exécution du produit de programme d'ordinateur à exécuter, mettre en œuvre et/ou piloter le procédé selon l'une des revendications 1 à 8.

10. Support de stockage lisible par machine sur lequel est stocké le produit de programme d'ordinateur selon la revendication 9.
